# EUROPEAN PATENT SPECIFICATION

(11) **EP 0 489 387 B1**
(45) Date of publication and mention of the grant of the patent: **02.04.1997**
(21) Application number: 91120668.8
(22) Date of filing: 02.12.1991
(51) Int. Cl.: H04N 7/087, H04N 5/45, H04N 5/44

(54) **Improved receiver of teletext transmissions**
Verbesserter Empfänger für Teletext Übertragungen
Récepteur d'émissions de télétexte amélioré

(30) Priority: 06.12.1990 IT 6796990
(43) Date of publication of application: 10.06.1992
(73) Proprietor: EDICO S.r.l., I-00197 Roma (IT)
(72) Inventor: Dini, Roberto, I-10098 Rivoli (TO) (IT); Farina, Attilio, I-10137 Torino (IT)

(56) References cited:
- EP-A- 0 343 636
- EP-A- 0 376 376
- EP-A- 0 377 334
- WO-A-92/06562
- DE-A- 4 006 271
- DE-A- 4 121 506
- GB-A- 2 217 144
- GB-A- 2 240 447
- US-A- 5 023 721
- PATENT ABSTRACTS OF JAPAN vol. 14, no. 483 (E-0993)22 October 1990 & JP-A-21 98 284
- PATENT ABSTRACTS OF JAPAN vol. 13, no. 421 (E-822)19 September 1989& JP-A-11 55 787

## Description

The present invention relates to a teletext transmissions receiver comprising means to receive a television signal, decoder means for obtaining also the associated teletext signal and display means to show a first chosen page.

There are known teletext transmissions receivers that include means to receive a television signal and obtain the relative video signal, destined to be shown by means of a special image reproducing apparatus, and also comprising decoder means for obtaining also the eventual signal (known in Italy as RAI televideo) associated to it. This signal consists of a library of numbered pages that are transmitted in sequence during some lines of the field blanking of the television signal; said pages are opportunely encoded and for their reception a special decoder is necessary. The decoder allows to show one page, selected by the user among those transmitted, alternatively to or superimposed on the normal television image.

There are also known television signals receivers that are able to show simultaneously on the screen, images that belong to two or more different television channels.

Generally the image or the additional images are of a minor dimension than that of the main one; for example a second image is typically reproduced in one angle of the main image, with a reduced size of about a third; in many cases it is possible to vary the sizes of such a second image.

This procedure is commonly designated with the initial P.I.P. taken from the English words Picture In Picture.

Said known receivers do not however consent to show two pages simultaneously.

Document EP-A-0 343 636 discloses a teletext receiver wherein a plurality of different teletext pages can be simultaneously displayed on a screen.

Document EP-A-0 376 376 discloses a picture in picture receiver wherein two tuners generate the television signals to be displayed.

The invention is based on the recognition of the fact that in certain cases it would be very useful to be able to consult simultaneously two teletext pages, for example to be able to consult a specific page without losing sight of the index page.

The aim of the present invention is therefore to indicate a teletext transmission receiver more flexible than those known, able to satisfy the needs of the user not satisfied with the known receivers.

The present invention achieves this aim by a teletext transmission receiver as set out in claim 1.

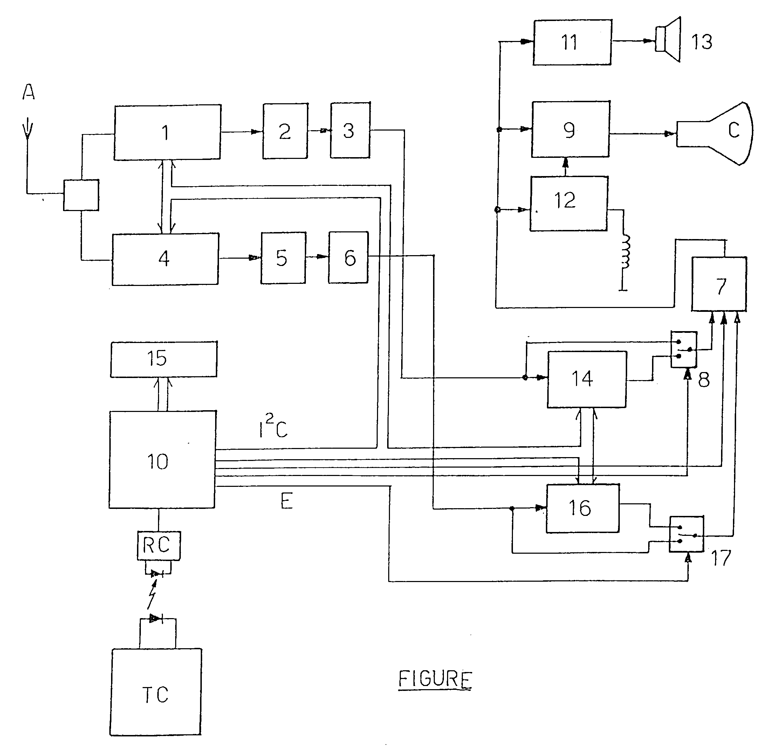

Further aims and advantages of the present invention will result clear from the description that follows and from the annexed drawings, supplied as an explicit and non limitative example, in which:
The figure schematically represents the diagram of a receiver of teletext transmission according to the invention.

In the figure the reference letter A indicates the aerial, connected to the receiver in order to pick up teletext transmission available. Said aerial is connected to two conventional tuners indicated respectively with the reference numbers 1 and 4; to said tuners two signals amplifiers follow of intermediate frequency, also conventional, indicated respectively with the numbers 2 and 5.

The amplifier 2 is connected in its output to a video detector 3; the amplifier 5, on its part, is connected in output to a video detector 6.

The detector circuit 3 is connected to a block 14 that contains a teletext signal decoder, of a known type, and, downstream, a converter circuit from RGB signals to composite video PAL signals (for example a type integrated circuit MC 1377 of the firm Motorola); the detector circuit 3 and the block 14 are then connected to a commutation circuit video of signals 8; the video detector 6, on its part, is connected to a block 16, equal to the block 14; the detector 6 and the block 16 are connected to the commutation circuit 17, equal to the circuit 8; the two commutators 8 and 17 are both controlled from a processor 10, comprising a microprocessor circuit of known type, that provides, depending of the cases, to control -them in order to assure that at their output are present the signals of the normal images, or the teletext pages. The exit of the two commutators 8 and 17 are connected to circuit 7 signals manipulator comprising also a memory, so called, of the control board; in its turn connected with the processor 10. The circuit 7 is of a known type (for example the part that acts as a signals commutator, can be made using an integrated circuit 2014) and is able to combine and to memorize the relative video signals to one or more images and, under the control of the processor 10, is thus possible to send to the successive video circuit amplifier 9, a combined image (of the designated type exactly P.I.P.) containing for example a main image (corresponding to the video signal coming from the chain 4, 5, 6) and a second different image of reduced size situated in an angle of the first (corresponding to the video signal coming from chain 1, 2, 3 ). Such combined image is then shown by the television image reproducer indicated with the letter C, represented for example by a normal colour picture-tube, or other image display of type known.

The circuit 11 is a normal audio signal amplifying chain, driving an acoustic reproducer 13; the circuit 12 is a normal signal generation block of deflection for the image reproducer C.

Naturally provided, even if not represented in the figure, for simple reasons, are known means of selecting signals, associated to the main chain (4, 5, 6) as to that of the secondary (1, 2, 3), preferably of the type to synthesis of frequency with two P.L.L. (for example of the type TSA 5510 by Philips), inserted respectively in the syntonizers 1 and 4 and commanded through the I2C bus of the microprocessor 10.

Appropriately commanding the commutators 8 and 17 and the mixer 7, it is possible to obtain on the screen of the image reproducer C various images:
- the television image of the main channel (1,2,3);
- a Teletext page of the main channel:
- the television image of the main channel together with the reduced television image of the secondary channel (4,5,6);
- a Teletext page of the main channel, together with the reduced image of a Teletext page of the secondary channel;
- the television image of the main channel together with the reduced image of a Teletext page of the secondary channel;
- a Teletext page of the main channel, together with the reduced television image of the secondary channel.

Acting also on the syntonization of the two tuners, and precisely tuning them both to the same television signal, two other combinations are possible:
- the television image of the main channel together with the reduced image of a Teletext page of the same signal;
- a Teletext page of the main channel, together to the reduced image of another Teletext page of the same signal.

In the case in which the reduced secondary image is that of a teletext page, it is advisable,so as to guarantee the legibility, that its dimensions are equal to about half of those of the main image.

The microprocessor receives the appropriate command signals from the user through a telecontrol device of the type known (TC/RC); among such command signals there will also be one to decide whether there has to be shown on the screen the television image of the main channel or the Teletext pages of the same; and another to decide in analog order regarding the secondary channel.

Such command signals will for example be obtained by means of one or more dedicated buttons of said telecontrol.

Naturally to manage the video reproduction there shall be provided an analog command system of the processor 7; to decide whether or not to also show the secondary video signal (as in any normal receiver of the type P.I.P.).

It is also provided a system of auxiliary visualization, indicated with the reference number 15, that serves to show the relative Teletext information (number of the requested page, number of the page received, Etc), useful particularly during the acquisition phase, in the case of superimposing a signal withdrawn from the secondary signal on the television image of the main signal. In fact in such a case and during the acquisition such information cannot be shown in the normal way, for the incompatibility of the pertinent synchronism signals to the two different television channels.

Such system of auxiliary visualization can consist of a separate conventional display, or could also be obtained with the known method O.S.D. (on screen display) on the main screen.

The characteristics of the receiver of teletext transmissions described are made clear by the description and the annexed drawings. From the description the advantages of receiver Teletext transmissions object of the present invention are also clear.

In particular they consist in that it is possible to consult simultaneously two different pages.

It is clear that the receiver of Teletext transmissions described is more flexible of than those known; it is also clear that numerous variants can be supplied by man skilled in the art, to the receiver of Teletext transmissions described as an example, without leaving the principles of novelty pertinent to the invention.

## Claims

1. A teletext transmission receiver comprising means to receive a television signal, decoder means to also obtain the associated teletext signal and display means to simultaneously show a plurality of chosen teletext pages, characterised in that the receiver includes:
- a plurality of television signal tuner means (1, 4);
- a plurality of teletext decoder means (14, 16) respectively coupled to said television signal tuner means;
- a processor means (10);
- a combining and memorising means (7) coupled to said display means (C);
- a plurality of switching means (8, 17) controlled by said processor means (10), for selectively connecting said plurality of teletext decoder means (14, 16) to said combining means (7).

2. A Teletext transmissions receiver, according to claim 1, characterized in that said combining and memorising means includes a device of the type P.I.P. (7) to show the second page with reduced dimensions, in the place of a part of the first.

3. A Teletext transmissions receiver, according to claim 1, characterized in that said combining and memorising means includes a second page memory (16) and a commutator (17).

4. A Teletext transmissions receiver, according to claim 2, characterized in that said receiver includes commutation means of the video signal (8,17) in order to visualize and select one of the following combinations:
- the television image of a main channel (1,2,3);
- a Teletext page of a main channel (1,2,3)
- the television image of a main channel together with the reduced television image of a secondary channel (4,5,6);
- a Teletext page of a main channel (1,2,3), together with the reduced image of a Teletext page of the secondary channel (4,5,6);
- the television image of a main channel (1, 2, 3) together with a reduced image of a Teletext page of the secondary channel (4,5,6);
- a Teletext page of a main channel (1,2,3), together with the reduced television image of a secondary channel (4,5,6).
- the television image of a main channel (1,2,3) together with the reduced image of a Teletext page of the same signal;
- a teletext page of a main channel (1,2,3), together with a reduced image of another teletext page of the same signal.

5. A Teletext transmissions receiver, according to claim 4, characterized in that said receiver includes a telecontrol device (TC,RC) associated to said processor (10).

6. A Teletext transmissions receiver, according to one of the previous claims, characterized in that said receiver includes a visualisation device (15) to show the number of said second teletext page.

## Patentansprüche

1. Teletextübertragungs-Empfänger mit einer Einrichtung zum Empfangen eines Fernsehsignals, einer Dekodiereinrichtung, um ebenfalls das zugeordnete Teletext-Signal zu erhalten, und einer Anzeigeeinrichtung zum gleichzeitigen Anzeigen mehrerer gewählter Teletext-Seiten,
dadurch gekennzeichnet, daß der Empfänger beinhaltet:
- mehrere Fernsehsignalabstimmeinrichtungen (1, 4);
- mehrere Teletext-Dekodiereinrichtungen (14, 16), die jeweils an die Fernsehsignalabstimmeinrichtungen gekoppelt sind;
- eine Verarbeitungseinrichtung (10);
- eine Zusammenfüge- und Speicher-Einrichtung (7), die an die Anzeigeeinrichtung (C) gekoppelt ist;
- mehrere Schalteinrichtungen (8, 17), welche durch die Verarbeitungseinrichtung (10) gesteuert werden, zum selektiven Verbinden der Teletext-Dekodiereinrichtungen (14, 16) mit der Zusammenfüge-Einrichtung (7).

2. Teletextübertragungs-Empfänger nach Anspruch 1,
dadurch gekennzeichnet, daß die Zusammenfüge- und Speicher-Einrichtung eine Vorrichtung des Typs P.I.P (7) beinhaltet, um die zweite Seite mit verringerten Abmessungen an der Stelle eines Teils der ersten anzuzeigen.

3. Teletextübertragungs-Empfänger nach Anspruch 1,
dadurch gekennzeichnet, daß die Zusammenfüge- und Speicher-Einrichtung einen zweiten Seitenspeicher (16) und einen Kommutator (17) beinhaltet.

4. Teletextübertragungs-Empfänger nach Anspruch 2,
dadurch gekennzeichnet, daß der Empfänger eine Kommutator-Einrichtung für das Videosignal (8, 17) zum Visualisieren und Selektieren einer der folgenden Kombinationen beinhaltet:
- das Fernsehbild eines Hauptkanals (1, 2, 3);
- eine Teletext-Seite eines Hauptkanals (1, 2, 3);
- das Fernsehbild eines Hauptkanals zusammen mit dem verkleinerten Fernsehbild eines zweiten Kanals (4, 5, 6);
- eine Teletext-Seite eines Hauptkanals (1, 2, 3) zusammen mit dem verkleinerten Bild einer Teletext-Seite des zweiten Kanals (4, 5, 6);
- das Fernsehbild eines Hauptkanals (1, 2, 3) zusammen mit einem verkleinerten Bild einer Teletext-Seite des zweiten Kanals (4, 5, 6);
- eine Teletext-Seite eines Hauptkanals (1, 2, 3) zusammen mit dem verkleinerten Fernsehbild eines zweiten Kanals (4, 5, 6);
- das Fernsehbild eines Hauptkanals (1, 2, 3) zusammen mit dem verkleinerten Bild einer Teletext-Seite des gleichen Signals; und
- eine Teletext-Seite eines Hauptkanals (1, 2, 3) zusammen mit einem verkleinerten Bild einer anderen Teletext-Seite des gleichen Signals.

5. Teletextübertragungs-Empfänger nach Anspruch 4,
dadurch gekennzeichnet, daß der Empfänger eine Fernsteuerungs-Vorrichtung (TC, RC) beinhaltet, die der Verarbeitungseinrichtung (10) zugeordnet ist.

6. Teletextübertragungs-Empfänger nach einem der vorstehenden Ansprüche,
dadurch gekennzeichnet, daß der Empfänger eine Visualisierungsvorrichtung (15) zum Anzeigen der Nummer der zweiten Teletext-Seite beinhaltet.

## Revendications

1. Un récepteur d'émissions télétexte comprenant des moyens de réception d'un signal de télévision, des moyens de décodage pour obtenir aussi le signal télétexte associé, et des moyens d'affichage pour simultanément présenter une pluralité de pages télétexte choisies, caractérisé en ce que le récepteur comprend:
- une pluralité de moyens de syntonisation ou de sélection du signal de télévision (1, 4);
- une pluralité de moyens de décodage télétexte (14, 16) respectivement couplés auxdits moyens de sélection du signal de télévision;
- des moyens de traitement (10) ;
- des moyens de combinaison et de mémorisation (7) couplés auxdits moyens d'affichage (c);
- une pluralité de moyens de commutation (8, 17) contrôlée par lesdits moyens de traitement (10) pour relier sélectivement ladite pluralité de moyens de décodage télétexte (14, 16) auxdits moyens de combinaison (7).

2. Un récepteur d'émissions télétexte selon la revendication 1, caractérisé en ce que lesdits moyens de combinaison et de mémorisation comprennent un dispositif du type à incrustation d'image (7) pour présenter la seconde page à des dimensions réduites, à la place d'une partie de la première.

3. Un récepteur d'émissions télétexte selon la revendication 1, caractérisé en ce que lesdits moyens de combinaison et de mémorisation comprennent une seconde mémoire de page (16) et un commutateur (17).

4. Un récepteur d'émissions télétexte selon la revendication 2, caractérisé en ce que ledit récepteur comprend des moyens de commutation du signal vidéo (8, 17) afin de visualiser et de sélectionner l'une des combinaisons suivantes:
- l'image de télévision d'une chaîne principale (1, 2, 3);
- une page télétexte d'une chaîne principale (1, 2, 3);
- l'image de télévision d'une chaîne principale, en même temps que l'image de télévision réduite d'une chaîne secondaire (4, 5, 6);
- une page télétexte d'une chaîne principale (1, 2,3), en même temps que l'image réduite d'une page télétexte de la chaîne secondaire (4, 5, 6);
- l'image de télévision d'une chaîne principale (1, 2, 3) en même temps que l'image réduite d'une page télétexte de la chaîne secondaire (4, 5, 6);
- une page télétexte d'une chaîne principale (1, 2, 3) en même temps qu'une image de télévision réduite d'une chaîne secondaire (4, 5, 6).
- l'image de télévision d'une chaîne principale (1, 2, 3) en même temps que l'image réduite d'une page télétexte du même signal;
- une page télétexte d'une chaîne principale (1, 2, 3) en même temps qu'une image d'une autre page télétexte du même signal.

5. Un récepteur d'émissions télétexte selon la revendication 4, caractérisé en ce que ledit récepteur comprend un dispositif de commande à distance (TC, RC) associé audit processeur de traitement (10).

6. Un récepteur d'émissions télétexte, selon l'une des revendications précédentes, caractérisé en ce que ledit récepteur comprend un dispositif de visualisation (15) pour indiquer le numéro de ladite seconde page télétexte.
